(19) Europäisches Patentamt
European Patent Office
Office européen des brevets

(11) **EP 4 017 166 A1**

(12) **EUROPEAN PATENT APPLICATION**
published in accordance with Art. 153(4) EPC

(43) Date of publication:
**22.06.2022 Bulletin 2022/25**

(51) International Patent Classification (IPC):
***H04W 72/04*** *(2009.01)*

(21) Application number: **19941799.9**

(52) Cooperative Patent Classification (CPC):
**H04W 28/18; H04W 72/04**

(22) Date of filing: **08.11.2019**

(86) International application number:
**PCT/CN2019/116834**

(87) International publication number:
**WO 2021/031390 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.08.2019 PCT/CN2019/101175**
**30.09.2019 PCT/CN2019/109721**

(71) Applicant: **Huawei Technologies Co., Ltd.**
**Longgang District**
**Shenzhen,**
**Guangdong 518129 (CN)**

(72) Inventors:
• **WU, Ji**
  **Shenzhen, Guangdong 518129 (CN)**
• **ZHANG, Jiayin**
  **Shenzhen, Guangdong 518129 (CN)**
• **JIA, Qiong**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND DEVICE FOR INDICATING CONTROL INFORMATION**

(57)     A method for determining a control information indication and an apparatus are provided. The method for indicating control information includes: receiving first information sent by a network device, where the first information is used to indicate the number of symbols occupied by a control resource set CORESET 0 in time domain and a first offset of the CORESET 0 in frequency domain (101); determining a time-frequency resource position of the CORESET 0 based on the first information and a preset subcarrier spacing (102); and receiving downlink control information at the time-frequency resource position of the CORESET 0 (103). According to this method, resource usage efficiency of PBCHs can be improved.

FIG. 3

**Description**

**TECHNICAL FIELD**

This application relates to communications technologies, and in particular, to a method for indicating control information and an apparatus.

**BACKGROUND**

A New Radio (New Radio, NR) standard defines a synchronization signal burst set (SS burst set), and the SS burst set is mainly used by user equipment (User Equipment, UE) to perform initial access, system message update, or beam (beam) management. Duration of each SS burst set is 5 ms, and a periodicity may be 5, 10, 20, 40, 80, or 100 ms. The SS burst set includes several synchronization signal blocks (Synchronization signal blocks, SSBs). When a carrier frequency is less than 6 GHz, each SS burst set includes a maximum of eight SSBs. When a carrier frequency is greater than 6 GHz, each SS burst set includes a maximum of 64 SSBs.

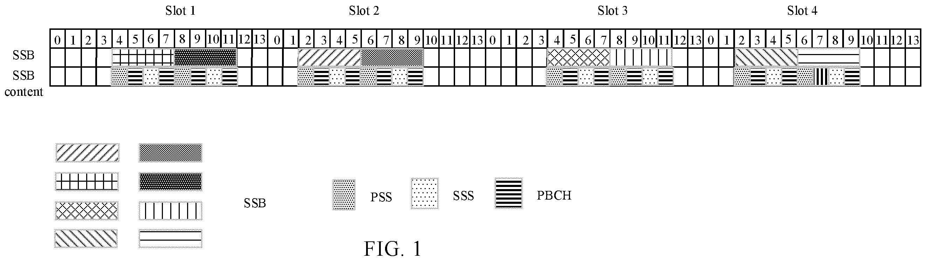

As shown in FIG. 1, each SSB occupies four symbols (symbol), which sequentially correspond to a primary synchronization signal (primary synchronization signal, PSS), a physical broadcast channel (physical broadcast channel, PBCH), a secondary synchronization signal (secondary synchronization signal, SSS), and a PBCH. Each SSB may correspond to a different beam direction, to ensure cell coverage.

However, configuration information of a physical downlink control channel sent through a PBCH occupies relatively large resource overheads.

**SUMMARY**

This application provides a method for indicating control information and an apparatus, so as to reduce resource overheads of information that is in a PBCH and that is used to indicate a time domain resource position of a CORESET 0.

According to a first aspect, an embodiment of this application provides a method for indicating control information. The method may include: receiving first information sent by a network device, where the first information is used to indicate the number of symbols occupied by a control resource set CORESET 0 in time domain and a first offset of the CORESET 0 in frequency domain; determining a time-frequency resource position of the CORESET 0 based on the first information and a preset subcarrier spacing; and receiving downlink control information at the time-frequency resource position of the CORESET 0.

In the solution of this application, the first information sent by the network device has fewer bits than information used to indicate a time domain resource position of a CORESET 0 in a conventional technology, so that resource usage efficiency of PBCHs can be improved.

In a possible design, when one slot supports sending of one or more synchronization signal blocks SSBs and CORESET 0s, the first information is further used to indicate the number of CORESET 0s in each slot.

In a possible design, the first offset is used to indicate a sequence number of a first resource block RB corresponding to the CORESET 0, the first RB is located in a bandwidth part in which a synchronization signal block corresponding to the first information is located, the first offset is any one of X1, X2, X3, and X4, and X1, X2, X3, and X4 are integers and are not equal.

In a possible design, when the preset subcarrier spacing is 15 kHz or 30 kHz, the first information includes four bits.

In the solution of this application, the first offset is any one of X1, X2, X3, and X4, so that four bits may be used to indicate the first offset, thereby reducing resource overheads.

In a possible design, the first offset is used to indicate a sequence number of a first resource block RB corresponding to the CORESET 0, the first RB is located in a bandwidth part in which a synchronization signal block corresponding to the first information is located, the first offset is any one of Y1, Y2, Y3, Y4, Y5, and Y6, and Y1, Y2, Y3, Y4, Y5, and Y6 are integers and are not equal.

In a possible design, when the preset subcarrier spacing is 15 kHz, the first information includes five bits.

In the solution of this application, the first offset is any one of Y1, Y2, Y3, Y4, Y5, and Y6, so that five bits may be used to indicate the first offset, thereby reducing resource overheads.

In a possible design, the method may further include: receiving second information sent by the network device, where the second information is used to indicate a second offset of the CORESET 0 in frequency domain, the second offset is used to indicate a sequence number of a subcarrier in a first RB corresponding to the CORESET 0, the second offset is any one of 0 to 11, and the time-frequency resource position of the CORESET 0 is determined based on the first information and the second information.

In the solution of this application, for an NR-U system, a value range of the second offset is 0 to 11, and only four bits are required for indication in a master information block. Compared with the NR, 1-bit indication overheads can be saved.

In a possible design, the bandwidth part in which the synchronization signal block corresponding to the first information is located is aligned with a frequency range of a wireless local area network, and the synchronization signal block is sent at a preset position of the bandwidth part.

In a possible design, the method may further include: receiving second information sent by the network device, where the second information is used to indicate at least one reference signal, and the at least one reference signal and the synchronization signal block are in a quasi co-location relationship.

According to a second aspect, an embodiment of this application provides a method for indicating control information. The method may include: sending first information to a terminal device, where the first information is used to indicate the number of symbols occupied by a control resource set CORESET 0 in time domain and a first offset of the CORESET 0 in frequency domain, and the first information is determined based on a preset subcarrier spacing; and sending downlink control information at a time-frequency resource position of the CORESET 0.

In a possible implementation, the method may further include: sending second information to the terminal device, where the second information is used to indicate a second offset of the CORESET 0 in frequency domain, the second offset is used to indicate a sequence number of a subcarrier spacing in a first RB corresponding to the CORESET 0, and the second offset is any one of 0 to 11.

In a possible design, a bandwidth part in which a synchronization signal block corresponding to the first information is located is aligned with frequency range division of a wireless local area network, and the synchronization signal block is sent at a preset position of the bandwidth part.

In a possible design, the method may further include: sending second information to the terminal device, where the second information is used to indicate at least one reference signal, and the at least one reference signal and the synchronization signal block are in a quasi co-location relationship.

According to a third aspect, an embodiment of this application provides a communications apparatus. The communications apparatus is configured to perform the method for indicating control information in the first aspect or any one of the possible designs of the first aspect. Specifically, the communications apparatus may include a module configured to perform the method for indicating control information in the first aspect or any one of the possible designs of the first aspect. For example, a transceiver module and a processing module may be included. The communications apparatus may be a terminal device.

According to a fourth aspect, an embodiment of this application provides a terminal device. The terminal device includes a memory and a processor, the memory is configured to store instructions, and the processor is configured to execute the instructions stored in the memory. In addition, execution of the instructions stored in the memory enables the processor to perform the method in the first aspect or any one of the possible designs of the first aspect.

According to a fifth aspect, an embodiment of this application provides a computer-readable storage medium. The computer-readable storage medium stores a computer program; and the program is executed by a processor to implement the method in the first aspect or any one of the possible designs of the first aspect.

According to a sixth aspect, an embodiment of this application provides a communications apparatus. The communications apparatus is configured to perform the method in the second aspect or any one of the possible designs of the second aspect. Specifically, the communications apparatus may include a module configured to perform the method for indicating control information in the second aspect or any one of the possible designs of the second aspect. For example, a transceiver module and a processing module may be included. The communications apparatus may be a network device.

According to a seventh aspect, an embodiment of this application provides a network device. The network device includes a memory and a processor, the memory is configured to store instructions, and the processor is configured to execute the instructions stored in the memory. In addition, execution of the instructions stored in the memory enables the processor to perform the method in the second aspect or any one of the possible designs of the second aspect.

An eighth aspect provides a computer-readable storage medium. The computer-readable storage medium stores a computer program; and the program is executed by a processor to implement the method in the second aspect or any one of the possible designs of the second aspect.

In the method for indicating control information and the apparatus provided in this application, the network device sends the master information block to the terminal device, where the master information block may include the first information, and the first information is used to indicate the number of symbols occupied by the CORESET 0 in time domain and the first offset of the CORESET 0 in frequency domain. The terminal device determines the time-frequency resource position of the CORESET 0 based on the first information and the preset subcarrier spacing. The network device sends the downlink control information at the time-frequency resource position of the CORESET 0. The first information in this application has fewer bits than information used to indicate a time domain resource position of a CORESET 0 in the conventional technology, so that resource usage efficiency of PBCHs can be improved.

## BRIEF DESCRIPTION OF DRAWINGS

FIG. 1 is a schematic diagram of a composition of an SS burst set;

FIG. 2 is another schematic diagram of an application scenario according to an embodiment of this application;

FIG. 3 is a flowchart of a method for indicating control information according to an embodiment of this application;

FIG. 4A is a schematic diagram of an SSB and a corresponding CORESET 0 according to an embodiment of this application;

FIG. 4B is a schematic diagram of another SSB and a corresponding CORESET 0 according to an embodiment of this application;

FIG. 4C is a schematic diagram of another SSB and a corresponding CORESET 0 according to an embodiment of this application;

FIG. 4D is a schematic diagram of another SSB and a corresponding CORESET 0 according to an embodiment of this application;

FIG. 5 is a schematic diagram of a communications apparatus 5000 according to an embodiment of this application;

FIG. 6 is a schematic diagram of another communications apparatus 5100 according to an embodiment of this application;

FIG. 7 is a schematic diagram of a communications apparatus 5200 according to an embodiment of this application;

FIG. 8 is a schematic block diagram of another communications apparatus 5300 according to an embodiment of this application; and

FIG. 9 is a schematic diagram of a sent SSB and an SSB candidate position according to an embodiment of this application.

## DESCRIPTION OF EMBODIMENTS

The terms "first", "second", and the like in this application are only used for distinguishing descriptions, but cannot be understood as indicating or implying relative importance, or as indicating or implying a sequence. Moreover, the terms "include", "have", and any other variant thereof are intended to cover a non-exclusive inclusion, for example, including a series of steps or units. Methods, systems, products, or devices are not necessarily limited to those explicitly listed steps or units, but may include other steps or units that are not explicitly listed or that are inherent to such processes, methods, products, or devices.

It should be understood that, in this application, "at least one" means one or more, and "a plurality of" means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between associated objects. "At least one of the following" or a similar expression thereof indicates any combination of the following, including any combination of one or more of the following. For example, at least one of a, b, or c may represent: a, b, c, "a and b", "a and c", "b and c", or "a, b, and c", where a, b, and c may be singular or plural.

A network device used in this application is a device that can communicate with a terminal device. The network device may be an access network device, a relay node, or an access point. For example, the network device may be a base transceiver station (Base Transceiver Station, BTS) in a global system for mobile communications (Global System for Mobile Communications, GSM) or a code division multiple access (Code Division Multiple Access, CDMA) network, may be a NodeB (NodeB, NB) in wideband code division multiple access (Wideband Code Division Multiple Access, WCDMA), or may be an evolved NodeB (Evolutional NodeB, eNB or eNodeB) in long term evolution (Long Term Evolution, LTE). The network device may alternatively be a radio controller in a cloud radio access network (cloud radio access network, CRAN) scenario. The network device may alternatively be a network device in a 5G network or a network device in a future evolved public land mobile network (Public Land Mobile Network, PLMN). The network device may alternatively be a wearable device, a vehicle-mounted device, or the like.

A terminal device used in this application is a communications apparatus having a communication function. For example, the terminal device may be a wireless communications device, an internet of things (Internet of Things, IoT) device, a wearable device, a vehicle-mounted device, a mobile terminal, customer premises equipment (Customer Premises Equipment, CPE), or the like. The mobile terminal may also be referred to as user equipment (User Equipment, UE for short), an access terminal, a subscriber unit, a subscriber station, a mobile station, a mobile console, a user terminal, a terminal, a wireless communications device, a user agent, or a user apparatus. The mobile terminal may be a smartphone, a cellular phone, a cordless phone, a tablet computer, a personal digital assistant (Personal Digital Assistant, PDA for short) device, an IoT device having a wireless communication function, a computing device, another processing device connected to a wireless modem, a vehicle-mounted device, a wearable device, a device in an internet of vehicles scenario, a terminal device in a 5G network, a terminal device in a future evolved PLMN network, or the like.

For example, an application scenario in this embodiment of this application may include a terminal device and a network device. The terminal device may be a terminal device in any one of the foregoing forms. Correspondingly, the network device may be a network device in any one of the foregoing forms. With the method for indicating control information in this application, the terminal device may receive first information sent by the network device, where the first information is used to indicate the number of symbols occupied by a control resource set 0 (Control Resource Set 0, CORESET 0) in time domain and a first offset of the CORESET 0 in frequency domain, determine a time domain resource position of the CORESET 0 based on the first information and a preset subcarrier spacing, and receive, at the time domain resource position of the CORESET 0, downlink control information (Downlink control information, DCI) sent by the network device, to further obtain resource configuration information for subsequent random access or perform an RMSI update. The first information in this application has fewer bits than information used to indicate a time domain resource position of a CORESET 0 in the conventional technology, so that resource usage efficiency of PBCHs can be improved. For specific explanations thereof, refer to the explanations of the following embodiments.

A control resource set 0 (Control Resource Set 0, CORESET 0) used in this application may also be referred to as a remaining system information CORESET (Remaining system information CORESET, RMSI CORESET). The RMSI CORESET has a same meaning, that is, the RMSI CORESET is used to carry a type0 physical downlink control channel (type0-PDCCH).

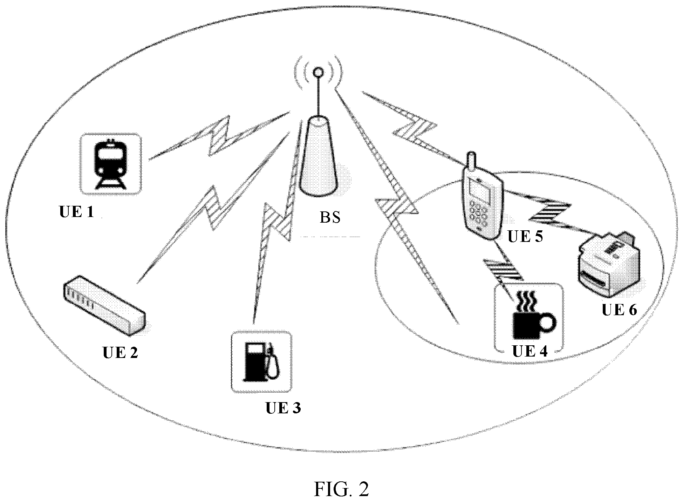

For example, FIG. 2 is a schematic diagram of another application scenario according to an embodiment of this application. As shown in FIG. 2, one base station (base station, BS) and six UEs are used as examples for description in the application scenario. The six UEs are respectively UE 1, UE 2, UE 3, UE 4, UE 5, and UE 6. For example, the base station may send the first information to UE 1 to UE 6. UE 1 to UE 6 may perform random access or perform an RMSI update based on the first information, and the base station may further receive uplink data sent by UE 1 to UE 6. In addition, a communications system may alternatively include UE 4 to UE 6. In the communications system, the BS may send downlink information to UE 1, UE 2, UE 3, and UE 5, and UE 5 may also send downlink information to UE 4 and UE 6.

It should be noted that this embodiment is described by using one BS and a single cell as examples. However, this embodiment of this application is not limited thereto.

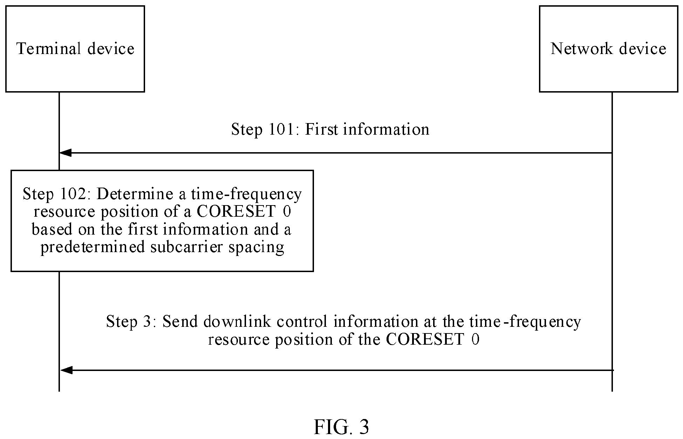

FIG. 3 is a flowchart of a method for indicating control information according to an embodiment of this application. The method in this embodiment relates to a terminal device and a network device. As shown in FIG. 3, the method in this embodiment may include the following steps.

Step 101: A network device sends first information to a terminal device.

The terminal device receives the first information sent by the network device. The first information may be carried in a master information block (master information block, MIB). The first information is used to indicate the number of symbols occupied by a CORESET 0 in time domain and a first offset of the CORESET 0 in frequency domain.

For example, in an initial access phase, the terminal device obtains a PBCH in a synchronization signal block by detecting the synchronization signal block, where the PBCH may carry the MIB, and the terminal device obtains the first information by parsing the MIB. In other words, the MIB is carried in the PBCH. The first information may be used to indicate the number of symbols occupied by the CORESET 0 in time domain and the first offset of the CORESET 0 in frequency domain. The number of symbols occupied by the CORESET 0 in time domain may be, for example, 1 or 2, and the first offset may be an offset at a resource block (Resource Block, RB) granularity. The offset may be an offset between a start position of the CORESET 0 in frequency domain and a start position of the synchronization signal block in frequency domain, an offset between a start position of the CORESET 0 in frequency domain and a start position of a bandwidth part (Bandwidth Part, BWP) in which the synchronization signal block is located in frequency domain, or an offset between an end position of the CORESET 0 in frequency domain and an end position of a BWP in which the synchronization signal block is located in frequency domain. The start position of the CORESET 0 in frequency domain may be a position of an RB with a smallest RB index (or sequence number) in RB resources occupied by the CORESET 0 in frequency domain. The start position of the synchronization signal block in frequency domain may be a position of an RB with a smallest RB index in RB resources occupied by the synchronization signal block in frequency domain. The end position of the CORESET 0 in frequency domain may be a position of an RB with a largest RB index in RB resources occupied by the CORESET 0 in frequency domain. The end position of the BWP in which the synchronization signal block is located in frequency domain may be a position of an RB with a largest RB index in RB resources occupied by the BWP in which the synchronization signal block is located in frequency domain.

For example, the application scenario shown in FIG. 2 is used as an example for description. The BS may send a synchronization signal block. UE 1, UE 2, and UE 3 separately detect the synchronization signal block sent by the BS, where the synchronization signal block carries the first information.

Step 102: The terminal device determines a position of the CORESET 0 based on the first information and a preset subcarrier spacing. Specifically, the terminal device determines a time-frequency resource (time-frequency resource) position of the CORESET 0.

In an example, the preset subcarrier spacing (Subcarrier spacing, SCS) may be 15 kHz or 30 kHz.

In another example, the terminal device may determine the preset subcarrier spacing based on a subcarrier spacing of the detected synchronization signal block. For example, if the subcarrier spacing of the SSB detected by the terminal device is 30 kHz, the terminal device may determine that the preset subcarrier spacing is 30 kHz. If the subcarrier spacing of the SSB detected by the terminal device is 15 kHz, the terminal device may determine that the preset subcarrier spacing is 15 kHz.

The terminal device may determine the number of symbols occupied by the CORESET 0 in time domain and the first offset of the CORESET 0 in frequency domain based on the first information and the preset subcarrier spacing. The first information may not indicate the number of RBs of frequency domain resources of the CORESET 0. The terminal device may determine the number of RBs of the frequency domain resources of the CORESET 0 based on the preset subcarrier spacing. In this embodiment of this application, subcarrier spacings of the SSB and the CORESET 0 are the same. For example, when the preset subcarrier spacing is 30 kHz, the number of RBs of the frequency domain resources of the CORESET 0 is 48; and when the preset subcarrier spacing is 15 kHz, the number of RBs of the frequency domain resources of the CORESET 0 is 96.

The method for indicating control information in this application may be applied to NR in unlicensed spectrum (NR in Unlicensed Spectrum, NR-U). For the NR-U, a multiplexing mode of an SSB and a CORESET 0 is usually time division multiplexing. Therefore, the first information may not indicate the multiplexing mode of the SSB and the CORESET 0.

For example, for the NR-U, a start position of the SSB in time domain (for example, a start symbol in time domain) and a corresponding CORESET 0 are adjacent to each other or separated by one symbol in time domain. A start symbol position of the CORESET 0 in one slot (slot) is fixed, and the number of symbols occupied by the CORESET 0 in time domain is 1 or 2. When the start position of the CORESET 0 is obtained, the terminal device may determine a time domain resource position of the CORESET 0 based on the number of symbols occupied by the CORESET 0 in time domain. For example, a BWP in which the SSB is located is 20 MHz. The terminal device may determine a frequency domain resource position of the CORESET 0 based on the first offset of the CORESET 0 in frequency domain and the number of RBs of the frequency domain resources of the CORESET 0. The terminal device may determine the time-frequency resource position of the CORESET 0 based on the time domain resource position and the frequency domain resource position of the CORESET 0.

According to the method provided in this embodiment of this application, the first information does not need to indicate information such as the subcarrier spacing of the CORESET 0, the number of RBs of the CORESET 0 in frequency domain, and the multiplexing mode of the SSB and the CORESET 0. Therefore, compared with information used to indicate a time domain resource position of a CORESET 0 in the conventional technology, the first information has fewer bits, so that resource occupation of PBCHs can be reduced, and saved resources may be used to indicate other information, thereby improving resource usage efficiency of the PBCHs.

Step 103: The network device sends downlink control information at the time-frequency resource position of the CORESET 0. In other words, the downlink control information is carried in the CORESET 0.

The terminal device receives the downlink control information at the time-frequency resource position of the CORESET 0. The terminal device may obtain resource configuration information of subsequent random access based on the downlink control information, so as to perform initial random access based on the resource configuration information of random access. Alternatively, the terminal device may update an RMSI based on the downlink control information.

In this embodiment, the network device sends the first information to the terminal device, where the first information is used to indicate the number of symbols occupied by the CORESET 0 in time domain and the first offset of the CORESET 0 in frequency domain. The terminal device determines the time-frequency resource position of the CORESET 0 based on the first information and the preset subcarrier spacing. The network device sends the downlink control information at the time-frequency resource position of the CORESET 0. The terminal device may obtain the resource configuration information of subsequent random access based on the downlink control information, so as to perform initial random access based on the resource configuration information of random access or update the RMSI based on the downlink control information. The first information in this application has fewer bits than information used to indicate a time domain resource position of a CORESET 0 in the conventional technology, so that resource usage efficiency of PBCHs can be improved.

In some embodiments, when one slot supports sending of one or more SSBs and CORESET 0s, the first information may be further used to indicate the number of CORESET 0s in each slot. For example, the number of CORESET 0s in each slot is 1 or 2.

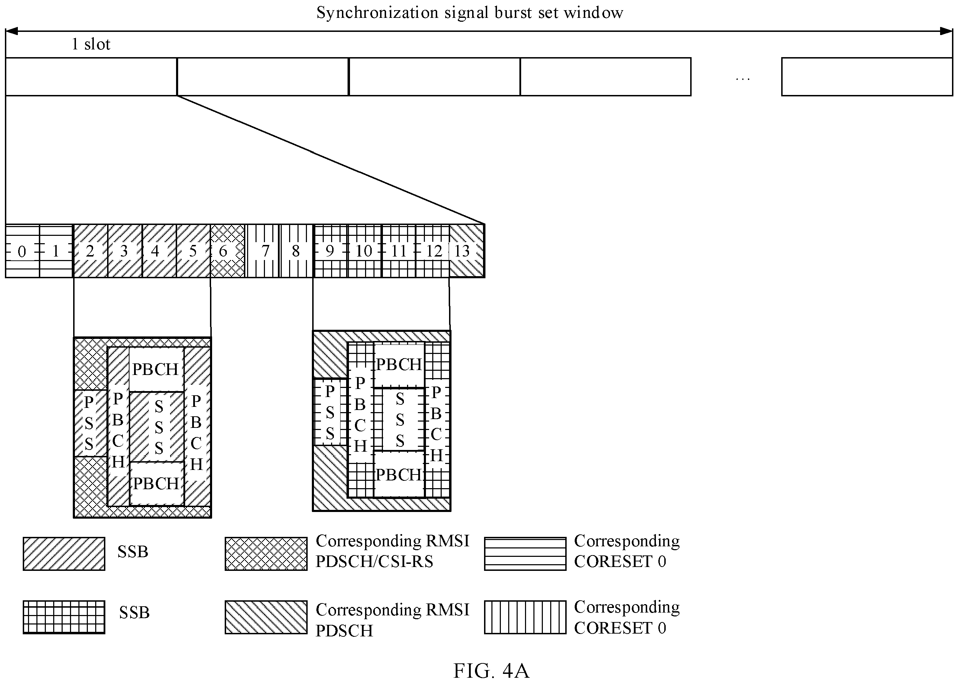

For an SSB in the NR-U, a time domain resource position of a CORESET 0 of the SSB may be shown in any one of FIG. 4A to FIG. 4D. The SSB and a CORESET 0 corresponding to the SSB are adjacent to each other or separated by one symbol. In addition, a start symbol position of the CORESET 0 in the slot is fixed, and the number of consecutive symbols of the CORESET 0 is 1 or 2. For example, as shown in any one of FIG. 4A to FIG. 4C, each SSB and a CORESET 0 corresponding to the SSB occupy half a slot (slot). In other words, there are two CORESET 0s in one slot.

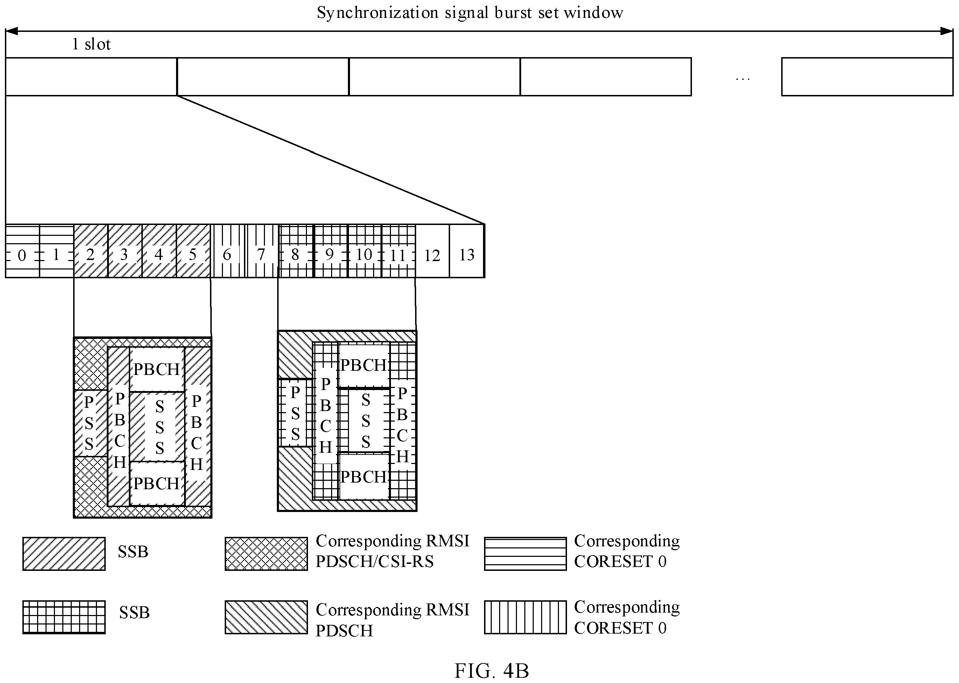

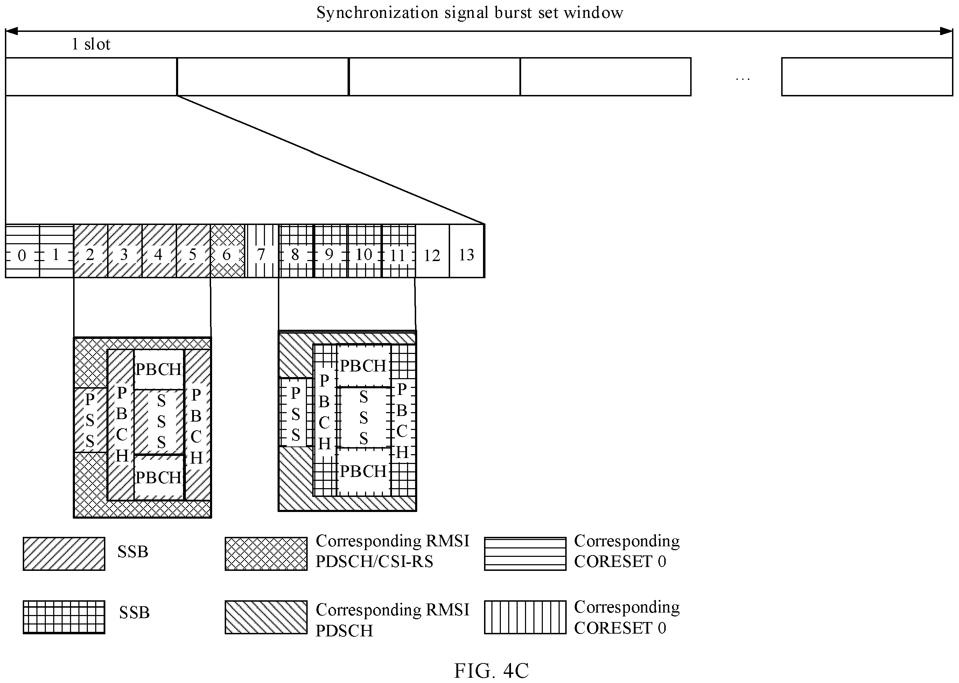

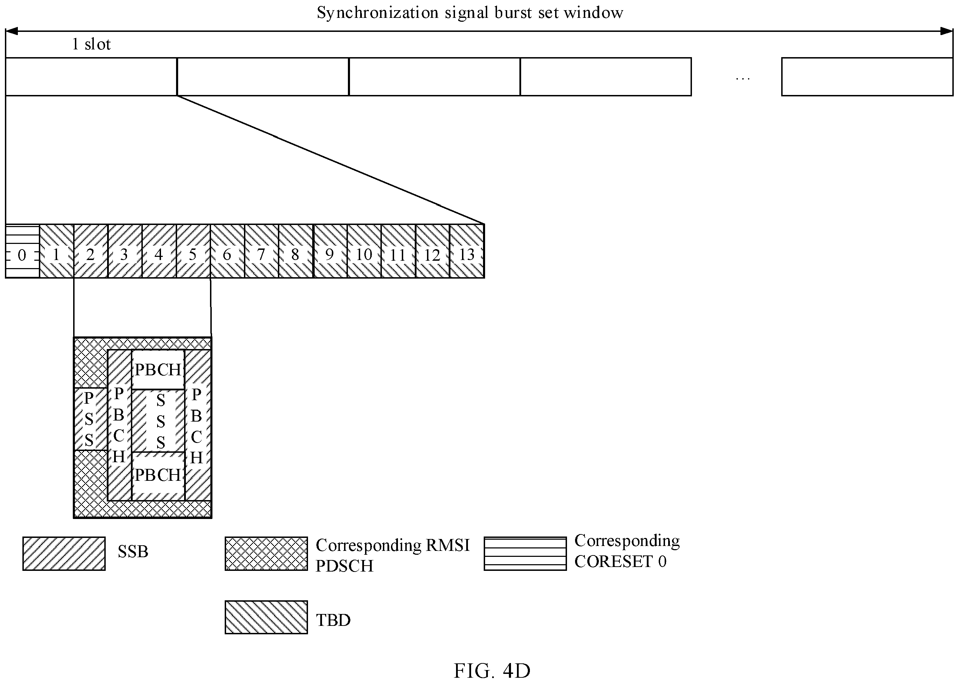

As shown in FIG. 4A, two CORESET 0s are disposed in one slot and respectively correspond to different SSBs, and the two CORESET 0s each occupy two symbols. Symbols occupied by a first CORESET 0 are symbol #0 and symbol #1, and symbols occupied by a second CORESET 0 are symbol #7 and symbol #8. As shown in FIG. 4B, two CORESET 0s are disposed in one slot and respectively correspond to different SSBs, and the two CORESET 0s each occupy two symbols. Symbols occupied by a first CORESET 0 are symbol #0 and symbol #1, and symbols occupied by a second CORESET 0 are symbol #6 and symbol #7. As shown in FIG. 4C, two CORESET 0s are disposed in one slot and respectively correspond to different SSBs. Symbols occupied by a first CORESET 0 are symbol #0 and symbol #1. A symbol occupied by a second CORESET 0 is symbol #7. As shown in FIG. 4D, one CORESET 0 is disposed in one slot, that is, the number of CORESET 0s in one slot is 1. A symbol occupied by the CORESET 0 is symbol #1.

It can be seen from FIG. 4A to FIG. 4D that, for the NR-U, the start position of the SSB in time domain and the corresponding CORESET 0 are adjacent to each other or separated by one symbol, the start symbol position of the CORESET 0 in the slot is fixed, and the number of consecutive symbols is 1 or 2.

In some embodiments, the first offset is used to indicate a sequence number of a first resource block RB corresponding to a CORESET 0. The first RB may be an RB with a smallest RB index (or sequence number) in RB resources occupied by the CORESET 0 in frequency domain, and the first RB is located in a bandwidth part in which a synchronization signal block corresponding to the first information (a master information block in which the first information is located) is located. The first offset of the frequency domain resource may be any one of X1, X2, X3, and X4. X1, X2, X3, and X4 are integers and are not equal. For example, X1=0, X2=1, X3=2, and X=4.

An NR-U initial access bandwidth is 20 MHz by default. Therefore, a position of a CORESET 0 in frequency domain is relatively fixed. For example, the preset subcarrier spacing is 30 kHz and the initial access bandwidth (20 MHz) occupies 51 RBs. In this case, when the preset subcarrier spacing is 30 kHz, the number of RBs of frequency domain resources of the CORESET 0 is 48. For example, the first offset is an offset between the start position of the CORESET 0 in frequency domain and the start position of the BWP in which the synchronization signal block is located in frequency domain. In this case, the first offset may be 0, 1, 2, or 3. The terminal device may determine the frequency domain resource position of the CORESET 0 based on the first offset. For example, sequence numbers of 51 RBs occupied by the BWP in which the synchronization signal block is located are 0 to 50. It is assumed that the first offset is 1. The terminal device may determine that the frequency domain resource position of the CORESET 0 is RBs whose sequence numbers are 1 to 48.

For example, the first offset is an offset between the start position of the CORESET 0 in frequency domain and the start position of the synchronization signal block in frequency domain. In this case, the first offset may be -17, -18, -19, or -20. The terminal device may determine the frequency domain resource position of the CORESET 0 based on the first offset. For example, sequence numbers of 51 RBs occupied by the BWP in which the synchronization signal block is located are 0 to 50. It is assumed that the synchronization signal block is always sent on RBs whose sequence numbers are 20 to 49. In this case, the first offset is -18. The terminal device may determine that the frequency domain resource position of the CORESET 0 is RBs whose sequence numbers are 2 to 49.

In some embodiments, when the preset subcarrier spacing is 30 kHz, the first information may include four bits.

In a possible implementation, the first information may correspond to one index (index), and different indexes (index) may correspond to quantities of symbols occupied by different CORESET 0s in time domain and first offsets of the CORESET 0s in frequency domain. For example, a correspondence between an index (index) and a parameter such as the number of symbols occupied by a CORESET 0 in time domain and a first offset of the CORESET 0 in frequency domain may be shown in Table 1.

Table 1 Configuration parameters of a CORESET 0 when the preset subcarrier spacing is 30 kHz

| Index (Index) | SSB and CORESET 0 multiplexing mode | Number of RBs (Number of RBs) | Number of symbols (Number of Symbols) | First offset Offset (RBs) | Number of CORESET 0s in each slot (Number of CORESET 0s in each slot) |
|---|---|---|---|---|---|
| 0 | 1 | 48 | 1 | X1 | 1 |
| 1 | 1 | 48 | 1 | X2 | 1 |
| 2 | 1 | 48 | 1 | X3 | 1 |
| 3 | 1 | 48 | 1 | X4 | 1 |
| 4 | 1 | 48 | 2 | X1 | 1 |
| 5 | 1 | 48 | 2 | X2 | 1 |
| 6 | 1 | 48 | 2 | X3 | 1 |

(continued)

| Index (Index) | SSB and CORESET 0 multiplexing mode | Number of RBs (Number of RBs) | Number of symbols (Number of Symbols) | First offset Offset (RBs) | Number of CORESET 0s in each slot (Number of CORESET 0s in each slot) |
|---|---|---|---|---|---|
| 7 | 1 | 48 | 2 | X4 | 1 |
| 8 | 1 | 48 | 1 | X1 | 2 |
| 9 | 1 | 48 | 1 | X2 | 2 |
| 10 | 1 | 48 | 1 | X3 | 2 |
| 11 | 1 | 48 | 1 | X4 | 2 |
| 12 | 1 | 48 | 2 | X1 | 2 |
| 13 | 1 | 48 | 2 | X2 | 2 |
| 14 | 1 | 48 | 2 | X3 | 2 |
| 15 | 1 | 48 | 2 | X4 | 2 |

As shown in Table 1, the first column in the table indicates an index (index), the second column indicates an SSB and CORESET 0 multiplexing mode, the third column indicates the number of RBs of a CORESET 0 in frequency domain, the fourth column indicates the number of symbols of a CORESET 0 in time domain, the fifth column indicates a first offset of a CORESET 0 in frequency domain, and the sixth column indicates the number of CORESET 0s in each slot. Each row indicates configurations of the foregoing parameters (such as an SSB and CORESET 0 multiplexing mode and the number of symbols of a CORESET 0) corresponding to different indexes.

For example, if the first information is 0001, an index corresponding to the first information is 1, and it may be determined that the SSB and CORESET 0 multiplexing mode is mode 1, the number of RBs of the CORESET 0 in frequency domain is 48, the number of symbols of the CORESET 0 in time domain is 1, the first offset of the CORESET 0 is X2, and the number of CORESET 0s in each slot is 1. In this way, a time-frequency resource position of the CORESET 0 is determined based on a configuration of each parameter.

It should be noted that Table 1 is an example for description and may alternatively be in another specific form. For example, Table 1 may not include a second column, a third column, or a sixth column. For another example, a sequence of rows in Table 1 may be another sequence. This embodiment of this application is not limited to a specific form of Table 1.

In another possible implementation, different bits of the first information correspond to different parameter configurations. For example, the first bit of the four bits of the first information is used to indicate the number of symbols occupied by a CORESET 0 in time domain, the second and third bits are used to indicate a first offset of the CORESET 0 in frequency domain, and the fourth bit is used to indicate the number of CORESET 0s in each slot. For example, when the first bit is 0, the number of symbols occupied by a CORESET 0 in time domain is 1; and when the first bit is 1, the number of symbols occupied by a CORESET 0 in time domain is 2. When the second and third bits are 00, a first offset is X1; when the second and third bits are 01, a first offset is X2; when the second and third bits are 10, a first offset is X3; and when the second and third bits are 11, the first offset is X4. When the fourth bit is 0, the number of CORESET 0s in each slot is 1; and when the fourth bit is 1, the number of CORESET 0s in each slot is 2. For example, when the first information is 0001, it may be determined that the number of symbols occupied by the CORESET 0 in time domain is 1, the first offset is X1, and the number of CORESET 0s in each slot is 1, so that the time-frequency resource position of the CORESET 0 is determined based on the foregoing parameter configuration.

In this embodiment, the network device sends first information to the terminal device, where the first information is used to indicate the number of symbols occupied by the CORESET 0 in time domain and the first offset of the CORESET 0 in frequency domain. The first information includes four bits. The terminal device determines the time-frequency resource position of the CORESET 0 based on the first information and the preset subcarrier spacing. The network device sends downlink control information at the time-frequency resource position of the CORESET 0. The first information in this application has fewer bits than information used to indicate a time domain resource position of a CORESET 0 in the conventional technology, so that resource usage efficiency of PBCHs can be improved.

In the conventional technology, the information used to indicate a time domain resource position of a CORESET 0 generally includes eight bits, and the first information in this embodiment of this application may include four bits, so that resource overheads can be reduced.

In some embodiments, a first offset of a frequency domain resource is used to indicate a sequence number of a first RB corresponding to a CORESET 0. The first RB is located in a bandwidth part in which a synchronization signal block corresponding to the first information (a master information block in which the first information is located) is located. The first offset of the frequency domain resource is any one of Y1, Y2, Y3, Y4, Y5, and Y6, and Y1,Y2, Y3, Y4, Y5, and Y6 are integers and are not equal. For example, Y1=0, Y2=1, Y3=2, Y4=3, Y5=4, and Y6=5.

An NR-U initial access bandwidth is 20 MHz by default. Therefore, a position of a CORESET 0 in frequency domain is relatively fixed. For example, the preset subcarrier spacing is 15 kHz and the initial access bandwidth (20 MHz) occupies 101 RBs. In this case, when the preset subcarrier spacing is 15 kHz, the number of RBs of the CORESET 0 in frequency domain is 96. For example, the first offset is an offset between the start position of the CORESET 0 in frequency domain and the start position of the BWP in which the synchronization signal block is located in frequency domain. In this case, the first offset may be 0, 1, 2, 3, 4, or 5. The terminal device may determine the frequency domain resource position of the CORESET 0 based on the first offset. For example, sequence numbers of 101 RBs occupied by the BWP in which the synchronization signal block is located are 0 to 100. It is assumed that the first offset is 1. The terminal device may determine that the frequency domain resource position of the CORESET 0 is RBs whose sequence numbers are 1 to 96.

In some embodiments, when the preset subcarrier spacing is 15 kHz, the first information includes five bits.

In a possible implementation, the first information may correspond to one index (index), and different indexes (index) may correspond to quantities of symbols occupied by different CORESET 0s in time domain and first offsets of the CORESET 0s in frequency domain. For example, a correspondence between an index (index) and a parameter such as the number of symbols occupied by a CORESET 0 in time domain and a first offset of the CORESET 0 in frequency domain may be shown in Table 2.

**Table 2 Configuration parameters of a CORESET 0 when the preset subcarrier spacing is 15 kHz**

| Index (Index) | SSB and CORESET 0 multiplexing mode | Number of RBs (Number of RBs) | Number of symbols (Number of Symbols) | First offset (RBs) | Number of CORESET 0s in each slot (Number of CORESET 0s in each slot) |
|---|---|---|---|---|---|
| 0 | 1 | 96 | 1 | Y1 | 1 |
| 1 | 1 | 96 | 1 | Y2 | 1 |
| 2 | 1 | 96 | 1 | Y3 | 1 |
| 3 | 1 | 96 | 1 | Y4 | 1 |
| 4 | 1 | 96 | 1 | Y5 | 1 |
| 5 | 1 | 96 | 1 | Y6 | 1 |
| 6 | 1 | 96 | 2 | Y1 | 1 |
| 7 | 1 | 96 | 2 | Y2 | 1 |
| 8 | 1 | 96 | 2 | Y3 | 1 |
| 9 | 1 | 96 | 2 | Y4 | 1 |
| 10 | 1 | 96 | 2 | Y5 | 1 |
| 11 | 1 | 96 | 2 | Y6 | 1 |
| 12 | 1 | 96 | 1 | Y1 | 2 |
| 13 | 1 | 96 | 1 | Y2 | 2 |
| 14 | 1 | 96 | 1 | Y3 | 2 |
| 15 | 1 | 96 | 1 | Y4 | 2 |
| 16 | 1 | 96 | 1 | Y5 | 2 |
| 17 | 1 | 96 | 1 | Y6 | 2 |
| 18 | 1 | 96 | 2 | Y1 | 2 |
| 19 | 1 | 96 | 2 | Y2 | 2 |
| 20 | 1 | 96 | 2 | Y3 | 2 |

(continued)

| Index (Index) | SSB and CORESET 0 multiplexing mode | Number of RBs(Number of RBs) | Number of symbols (Number of Symbols) | First offset (RBs) | Number of CORESET 0s in each slot (Number of CORESET 0s in each slot) |
|---|---|---|---|---|---|
| 21 | 1 | 96 | 2 | Y4 | 2 |
| 23 | 1 | 96 | 2 | Y5 | 2 |
| 24 | 1 | 96 | 2 | Y6 | 2 |

As shown in Table 2, a configuration corresponding to each column in Table 2 is the same as a configuration of each column in Table 1, and details are not described herein again. A difference between Table 2 and Table 1 lies in that the first offset may be one of six values. Therefore, there are 24 indexes in Table 2. Each index corresponds to a configuration of a different parameter (such as an SSB and CORESET 0 multiplexing mode and the number of symbols of a CORESET 0).

For example, if the first information is 00001, an index corresponding to the first information is 1, and it may be determined that the SSB and CORESET 0 multiplexing mode is mode 1, the number of RBs of the CORESET 0 in frequency domain is 96, the number of symbols of the CORESET 0 in time domain is 1, the first offset of a frequency domain resource of the CORESET 0 is Y2, and the number of CORESET 0s in each slot is 1. In this way, a time-frequency resource position of the CORESET 0 is determined based on a configuration of each parameter.

It should be noted that Table 2 is an example for description and may alternatively be in another specific form. For example, Table 2 may not include a second column, a third column, or a sixth column. For another example, a sequence of rows in Table 2 may be another sequence. This embodiment of this application is not limited to a specific form of Table 2.

When the preset subcarrier spacing is 15 kHz, the first information may also include four bits. For example, to reduce resource overheads of the first information, the first offset may support any four of Y1, Y2, Y3, Y4, Y5, and Y6, so that the first information may be reduced to four bits. When the first offset supports any four of Y1,Y2, Y3, Y4, Y5, and Y6, a parameter configuration table of the first offset is similar to the table. Differences lie in that the number of RBs of a CORESET 0 is 96 and first offsets are any four of Y1, Y2, Y3, Y4, Y5, and Y6. In some embodiments, values of any four of Y1, Y2, Y3, Y4, Y5, and Y6 may be equal to values of X1, X2, X3, and X4. For another example, when the number of CORESET 0s in each slot is always 2, the first information may also include four bits.

In this embodiment, the network device sends first information to the terminal device, where the first information is used to indicate the number of symbols occupied by the CORESET 0 in time domain and the first offset of the CORESET 0 in frequency domain. The first information includes four bits or five bits. The terminal device determines the time-frequency resource position of the CORESET 0 based on the first information and the preset subcarrier spacing. The network device sends downlink control information at the time-frequency resource position of the CORESET 0. The first information in this application has fewer bits than information used to indicate a time domain resource position of a CORESET 0 in the conventional technology, so that resource usage efficiency of PBCHs can be improved.

In the conventional technology, the information used to indicate a time domain resource position of a CORESET 0 generally includes eight bits, and the first information in this embodiment of this application may include four bits or five bits, so that resource overheads can be reduced.

In some embodiments, the terminal device in this embodiment of this application may further receive second information sent by the network device. In other words, the master information block may further include second information. The second information is used to indicate a second offset of a CORESET 0 in frequency domain, and the second offset is used to indicate a sequence number of a subcarrier in a first RB corresponding to the CORESET 0. The sequence number of the subcarrier in the first RB may be a smallest subcarrier sequence number in an RB with a smallest RB index (or sequence number) in RB resources occupied by the CORESET 0 in frequency domain, or may be referred to as a start position of the subcarrier in the first RB. The second offset is any one of 0 to 11, and a time-frequency resource position of the CORESET 0 is determined based on the first information and the second information. The second offset may be an offset at a subcarrier granularity. The second information may be a subcarrier offset of an SSB (ssb-subcarrieroffset) in the master information block.

For example, when division of 20 MHz initial access channels in the NR-U is different from frequency range division in a general standard of an existing wireless local area network (Wi-Fi), a frequency domain position for sending an SSB may not be fixed. The terminal device may determine, based on the second information and the following formula (1) or formula (2), a lowest carrier frequency of a physical resource block (PRB) in which a lowest carrier is located. Further, the terminal device determines, based on the first information, a time-frequency resource position of a CORESET 0 in the 20 MHz bandwidth in which the SSB is located, that is, a sequence number of the first RB corresponding to the CORESET 0 and the sequence number of the subcarrier in the first RB may be determined. When the preset subcarrier spacing is 30 kHz, formula (1) is used. When the preset subcarrier spacing is 15 kHz, formula (2) is used. The lowest carrier frequency may be a start position of a subcarrier of an occupied resource.

$$\text{Lowest carrier frequency of a PRB in which an SSB lowest carrier is located} = \text{Frequency of the SSB lowest carrier} - K\_ssb * 30 \text{ kHz} \qquad (1)$$

$$\text{Lowest carrier frequency of a PRB in which an SSB lowest carrier is located} = \text{Frequency of the SSB lowest carrier} - K\_ssb * 15 \text{ kHz} \qquad (2)$$

Subcarrier spacings of an SSB and a corresponding CORESET 0 are the same. Therefore, when the terminal device blindly detects the SSB and confirms that the subcarrier spacing of the SSB is 30 kHz, a value range of the offset is 0 to 11 subcarriers, and only 4-bit indication overheads are required to indicate K_ssb, where K_ssb is a subcarrier offset of the SSB (ssb-subcarrieroffset). When the terminal device blindly detects the SSB and the subcarrier spacing of the SSB is 15 kHz, a value range of the offset is also 0 to 11 subcarriers. Therefore, only 4-bit indication overheads are required to indicate K_ssb.

It can be learned that, for the NR-U system, a value range of an ssb-subcarrieroffset is 0 to 11, and only four bits are required for indication in the master information block, which can reduce 1-bit indication overheads compared with NR.

In some embodiments, the bandwidth part in which the synchronization signal block corresponding to the first information (the master information block in which the first information is located) is located is aligned (align) with a frequency range of a wireless local area network, and the synchronization signal block is sent at a preset position of the bandwidth part.

For example, because the NR-U needs to take into account coexistence with a wireless local area network (Wi-Fi) in a 5 GHz frequency range, a possible implementation is that channels are divided based on the same frequency range as the wireless local area network (Wi-Fi) and data/control information transmission is performed. For example, an SSB may be sent at a fixed position on each 20 MHz frequency range. When detecting the SSB, the terminal device may determine an offset between a start position of the SSB in frequency domain and a start position of the 20 MHz bandwidth in frequency domain. Because a frequency domain position of the SSB is fixed, no additional indication is required, and information used to indicate the ssb-subcarrieroffset in the master information block may be used for other purposes. For example, the second information may be used to indicate at least one reference signal. The at least one reference signal is in a quasi co-location (Quasi Co-Location, QCL) relationship with the synchronization signal block, so as to complete receiving-side beamforming or assistance in a receive processing procedure for the terminal device, thereby improving random access efficiency. The second information may further indicate whether to send paging, a length of a demodulation reference signal unit (Demodulation Reference Signal unit, DRS unit), and the like. Examples are not described one by one in this embodiment of this application.

In this embodiment, when NR-U channel division is the same as the general standard of the wireless local area network, the second offset may be determined based on a frequency on which the SSB is detected and a corresponding frequency range, so that an indication is not required in the master information block, and indication overheads can be reduced.

In another embodiment, the network device further sends third information to the terminal device, where the third information is used to indicate a configuration of a control resource set 0 (CORESET 0) and a configuration of a type0-PDCCH (type0-PDCCH) common search space (searchSpaceZero). The third information is carried in MIB information of the SSB. As shown in Table 3, the third information is an index value in the table. When the SSB and the CORESET 0 use a time division multiplexing (time division multiplexing, TDM) manner, the terminal device may obtain a detection position of a type0-PDCCH common search space associated with SSB i based on parameters M, O, first symbol index (first symbol index) of the SSB, and SSB index (index) i in Table 3, where M represents a parameter related to the number of type0-PDCCH common search spaces in each slot. The terminal device may search for a PDCCH at the obtained detection position. Table 3 is predefined in the standard, or is sent by the network device to the terminal device.

The following provides further description. The type0-PDCCH common search space associated with SSB i is two consecutive slots starting from slot (slot) $n_0$ within a frame whose system frame number (system frame number, SFN) is $SFN_C$. The slot $n_0$ meets the following rule:

$$n_0 = \left( O \cdot 2^\mu + \lfloor i \cdot M \rfloor \right) \bmod N_{\text{slot}}^{\text{frame},\mu}$$

$N_{\text{slot}}^{\text{frame},\mu}$ indicates the number of slots included in one system frame. In different subcarrier spacings, quantities of slots included in system frames are different. For example, if the subcarrier spacing is 15 kHz, one system frame includes 10 slots; and if the subcarrier spacing is 30 kHz, one system frame includes 20 slots. $\mu$ is related to the subcarrier spacing. For example, if the subcarrier spacing is 15 kHz, $\mu = 0$; and if the subcarrier spacing is 30 kHz, $\mu = 1$.

The system frame number $SFN_C$ meets the following rules:

if $\left\lfloor \left( O \cdot 2^\mu + \lfloor i \cdot M \rfloor \right) / N_{\text{slot}}^{\text{frame},\mu} \right\rfloor \bmod 2 = 0$ and $SFN_C \bmod 2 = 0$, the $SFN_C$ is an even number;

if $\left\lfloor \left( O \cdot 2^\mu + \lfloor i \cdot M \rfloor \right) / N_{\text{slot}}^{\text{frame},\mu} \right\rfloor \bmod 2 = 1$ and $SFN_C \bmod 2 = 1$, the $SFN_C$ is an odd number.

**Table 3: Parameters for PDCCH monitoring occasions for Type0-PDCCH CSS set - SS/PBCH block and CORESET multiplexing pattern 1 and FR1**

| Index (Index) | O | Number of search space sets per slot (Number of search space sets per slot) | M | First symbol index (First symbol index) |
|---|---|---|---|---|
| 0 | 0 | 1 | 1 | 0 |
| 1 | 0 | 2 | 1/2 | {0, if $i$ is even}, { $N_{\text{symb}}^{\text{CORESET}}$, if $i$ is odd} |
| 2 | 2 | 1 | 1 | 0 |
| 3 | 2 | 2 | 1/2 | {0, if $i$ is even}, { $N_{\text{symb}}^{\text{CORESET}}$, if $i$ is odd} |
| 4 | 5 | 1 | 1 | 0 |
| 5 | 5 | 2 | 1/2 | {0, if $i$ is even}, { $N_{\text{symb}}^{\text{CORESET}}$, if $i$ is odd} |
| 6 | 7 | 1 | 1 | 0 |
| 7 | 7 | 2 | 1/2 | {0, if $i$ is even}, { $N_{\text{symb}}^{\text{CORESET}}$, if $i$ is odd} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

"Number of search space sets per slot" indicates the number of search space sets (search space set) in each slot.

In an embodiment, an entry in Table 4 is included in *searchSpaceZero* to increase flexibility for the network device to send a DRS. Under configurations corresponding to O=10 and O=15 in Table 4, the network device sends a DRS in a frame whose $SFN_c$ is an odd number, and may alternatively configure a type0-PDCCH common search space set (common search space set, CSS set) in the same slot as the SSB associated with the type0-PDCCH CSS set. When M=1/2 and "Number of search space sets per slot" is 1, the terminal device is configured to detect a type0-PDCCH CSS set in one slot only once, and the type0-PDCCH CSS set is configured in a slot that is the same as the associated SSB. In actual use, only entries in Table 4 may be included. These entries may be added to an existing table, such as Table 3, or may replace Table 3 defined in existing standards.

**Table 4: Parameters for PDCCH monitoring occasions for TypeO-PDCCH CSS set - SS/PBCH block and CORESET multiplexing pattern 1 and FR1**

| Index (Index) | $O$ | Number of search space sets per slot (Number of search space sets per slot) | $M$ | First symbol index (First symbol index) |
|---|---|---|---|---|
| 0 | 0 | 1 | 1/2 | 0 |
| 1 | 0 | 2 | 1/2 | {0, if $i$ is even}, {6, if $i$ is odd} |
| 2 | 0 | 2 | 1/2 | {0, if $i$ is even}, {7, if $i$ is odd} |
| 3 | 0 | 2 | 1/2 | {0, if $i$ is even}, { $N_{\text{symb}}^{\text{CORESET}}$, if $i$ is odd} |
| 4 | 5 | 1 | 1/2 | 0 |
| 5 | 5 | 2 | 1/2 | {0, if $i$ is even}, {6, if $i$ is odd} |
| 6 | 5 | 2 | 1/2 | {0, if $i$ is even}, {7, if $i$ is odd} |
| 7 | 5 | 2 | 1/2 | {0, if $i$ is even}, { $N_{\text{symb}}^{\text{CORESET}}$, if $i$ is odd} |
| 8 | 10 | 1 | 1/2 | 0 |
| 9 | 10 | 2 | 1/2 | {0, if $i$ is even}, {6, if $i$ is odd} |
| 10 | 10 | 2 | 1/2 | {0, if $i$ is even}, {7, if $i$ is odd} |
| 11 | 10 | 2 | 1/2 | {0, if $i$ is even}, { $N_{\text{symb}}^{\text{CORESET}}$, if $i$ is odd} |
| 12 | 15 | 1 | 1/2 | 0 |
| 13 | 10 | 2 | 1/2 | {0, if $i$ is even}, {6, if $i$ is odd} |
| 14 | 15 | 2 | 1/2 | {0, if $i$ is even}, {7, if $i$ is odd} |
| 15 | 15 | 2 | 1/2 | {0, if $i$ is even}, { $N_{\text{symb}}^{\text{CORESET}}$, if $i$ is odd} |

Herein, "if i is odd" indicates a case in which the index of the SSB is an odd number, and "if i is even" indicates a case in which the index of the SSB is an even number. "First symbol index" in the table includes {6, if $i$ is odd} or {7, if $i$ is odd} configurations, allowing the terminal device to start detecting a type0-PDCCH CSS set on a symbol 6 or symbol 7 of a same subframe as an odd SSB associated with the type0-PDCCH CSS set. In this way, the gNB may continuously send a type0-PDCCH and an SSB by using a same beam, thereby avoiding continuous beam switching in a short time. $N_{\text{symb}}^{\text{CORESET}}$ indicates the number of symbols occupied by a CORESET 0, for example, the number of symbols occupied by a CORESET 0 in one slot.

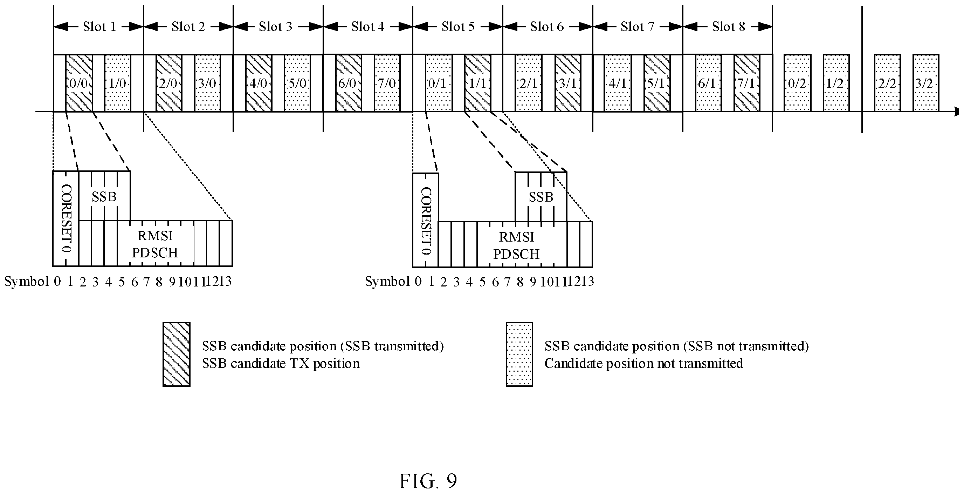

For example, the network device sends eight SSBs, and a type0-PDCCH and an RMSI PDSCH corresponding to each SSB occupy one slot. The network device may send the SSB and the type0-PDCCH and the RMSI PDSCH corresponding to the SSB in a manner shown in FIG. 9. Four SSBs are respectively sent in slots 1 to 4. The four SSBs select SSB candidate positions (candidate position) located in first half parts of the slots (or even-numbered SSB positions) for sending, where the SSB candidate positions occupy symbols 2, 3, 4, and 5. Four SSBs are respectively sent in slots 5 to 8. The four SSBs select SSB candidate positions located in second half parts of the slots (or odd-numbered SSB positions) for sending, where the SSB candidate positions occupy symbols 9, 10, 11, and 12 (not shown in the figure), or symbols 8, 9, 10, and 11. The terminal device detects a type0-PDCCH corresponding to the SSB at the first several symbols (which may be symbol 0 or symbols 0 and 1) of the slot in which the SSB is located. A position marked by X/Y in FIG. 9 indicates an SSB candidate position in a DRS transmission window that may be used to transmit an SSB. In the embodiment shown in FIG. 9, X indicates an index of a PBCH DMRS sequence (PBCH DMRS sequence index) in an SSB transmitted at the SSB candidate position, and a value of X may be 0, 1, 2, ..., or 7. Y indicates indication information carried in a PBCH payload (PBCH payload) transmitted at the SSB candidate position, and a value of Y may be 0, 1, or 2. In an MIB carried by a PBCH in an SSB, the network device may indicate an index value shown in Table 3 to the terminal device. In other words, the third information may be an index in Table 4, and the value of the third information is a value of the index. For example, the network device may indicate the terminal device to use a configuration corresponding to index=0, 4, 8, or 12. In this case, the terminal device may perform PDCCH retrieval based on the configuration corresponding to index=0, 4, 8, or 12. The terminal device may obtain a sequence number of an SSB from a PBCH DMRS sequence index and a PBCH payload, and obtain, based on PBCH DMRS sequence indexes in a plurality of detected SSBs, a quasi co-location (quasi co-location, QCL) relationship between different detected SSBs. If SSBs located in second half slots are not allowed to associate with a type0-PDCCH CSS set starting from symbol 0, it is not possible to support sending of SSBs with eight different QCL assumptions in the DRS. In addition, the type0-PDCCH and the RMSI-PDSCH associated with the SSB occupy an entire slot. This affects system coverage or increases interference to surrounding users. The technical problem can be resolved by using the configurations provided in this application.

In still another implementation, when a minimum DRS sending periodicity is less than 20 ms, this application provides a configuration. When the minimum DRS sending periodicity is less than 20 ms, the *searchSpaceZero* may use configurations in Table 5 below:

**Table 5: Parameters for PDCCH monitoring occasions for Type0-PDCCH CSS set - SS/PBCH block and CORESET multiplexing pattern 1 and FR1**

| Index (Index) | PDCCH monitoring occasions (PDCCH monitoring occasions) (SFN and slot number) | Number of search space sets per slot (Number of search space sets per slot) | First symbol index (First symbol index) |
|---|---|---|---|
| 0 | $SFN_C = SFN_{SSB,i}$ $n_C = n_{SSB,i}$ | 1 | 0 |
| 1 | $SFN_C = SFN_{SSB,i}$ $n_C = n_{SSB,i}$ | 2 | {0, if $i$ is even}, {6, if $i$ is odd} |
| 2 | $SFN_C = SFN_{SSB,i}$ $n_C = n_{SSB,i}$ | 2 | {0, if $i$ is even}, {7, if $i$ is odd} |
| 3 | $SFN_C = SFN_{SSB,i}$ $n_C = n_{SSB,i}$ | 2 | {0, if $i$ is even}, { $N_{symb}^{CORESET}$ , if $i$ is odd} |

Therefore, even when a DRS sending periodicity is less than 20 ms, a type0-PDCCH CSS set can be configured in the same slot as an associated SSB. This avoids a failure to use the parameters M and O to indicate to detect a slot and a system frame in which the type0-PDCCH CSS set is located. $SFC_C$ indicates a system frame in which the type0-PDCCH common search space set is located, and $SFN_{ssb,i}$ indicates a system frame in which the SSB associated with the type0-PDCCH common search space set is located. $SFC_C = SFN_{ssb,i}$ indicates that the system frame in which the type0-PDCCH common search space set is located is the same as the system frame in which the SSB associated with the type0-PDCCH common search space set is located. $n_c$ indicates a slot in the system frame in which the type0-PDCCH common search space set is located, and $n_{SSB,i}$ indicates a slot in the system frame in which the SSB associated with the type0-PDCCH common search space set is located. $n_C = n_{SSB,i}$ indicates that the slot in the system frame in which the type0-PDCCH common search space set is located is the same as the slot in the system frame in which the SSB associated with the type0-PDCCH common search space set is located. Herein, "if i is odd" indicates a case in which the index of the SSB is an odd number, and "if i is even" indicates a case in which the index of the SSB is an even number.

The following first explains a synchronization raster used in this application as follows:

The synchronization raster (synchronization raster) indicates a frequency domain position of a synchronization signal block used by a UE to perform system access. Optionally, when there is no signaling that explicitly indicates a position of a synchronization signal block, the UE determines a frequency domain position of the synchronization signal block based on the synchronization raster. On the synchronization raster, the frequency domain position of the synchronization signal block is defined as an SSB reference frequency $SS_{REF}$, which is numbered GSCN. In other words, each SSB reference frequency corresponds to a global synchronization channel number (global synchronization channel number, GSCN). In a system, different GSCN values may be defined for all available frequency ranges (frequency range) globally. Refer to Table 5.4.3.1-1 in section 5.4.3.2 of 3GPP 38.101-1, which provides resource elements corresponding to a synchronization signal block reference frequency $SS_{REF}$. Subcarrier spacings of a synchronization raster and an SSB are defined for each frequency range.

**Table 5.4.3.1-1: GSCN parameters for the global frequency raster**

| Frequency range (Frequency range) | SS block frequency position $SS_{REF}$ | GSCN | Range of GSCN (Range of GSCN) |
|---|---|---|---|
| 0-3000 MHz | $N * 1200$ kHz $+ M * 50$ kHz, $N=1:2499$, $M \in \{1,3,5\}$ (Note) | $3N + (M - 3)/2$ | 2-7498 |
| 3000-24250 MHz | $3000$ MHz $+ N * 1.44$ MHz $N=0:14756$ | $7499 + N$ | 7499-22255 |
| 24250-100000 MHz | $24250.08$ MHz $+ N * 17.28$ MHz $N=0:4383$ | $22256 + N$ | 22256-26639 |
| NOTE: The default value for *operating bands* which only support SCS spaced channel raster(s) is M=3. | | | |

Optionally, in some embodiments, first frequency domain offset information between the CORESET 0 and a synchronization signal block or a synchronization raster value is preset by the system, and the first frequency domain offset information may be referred to as a "first frequency domain offset". The synchronization signal block may be an SS block or an SS/PBCH block. The first frequency domain offset information may be frequency domain offset information in a unit of Hz, MHz, kHz, or the like, or may be frequency domain offset information in a unit of a subcarrier, a physical resource block PRB, a resource element RE, or the like. It may be understood that when different configuration manners, for example, different subcarrier spacings, are used, values corresponding to the first frequency domain offset information may be different. However, it should be understood that mathematical conversion may be performed between first frequency domain offset information represented by using different basic units as units. This is not limited in this application. For example, a synchronization raster value refers to an $SS_{REF}$ on a synchronization raster. When the first frequency domain offset information indicates an offset between a CORESET 0 and a synchronization signal block, the UE determines the first frequency domain offset information between the CORSET 0 and the synchronization signal block based on an $SS_{REF}$ of the synchronization signal block on the synchronization raster. Specifically, the base station sends the synchronization signal block. Correspondingly, the UE detects the synchronization signal block, and determines the first frequency domain offset information of the CORESET 0 based on a GSCN corresponding to the detected synchronization signal block (with reference to Table 5.4.3.1-1 and Table 5 below), so as to determine a position of the CORESET 0. Alternatively, for example, the UE detects a synchronization signal block on a synchronization raster. When a frequency domain offset indicates an offset between a CORESET 0 and a synchronization raster value, the UE determines frequency domain offset information between the CORESET 0 and the synchronization raster value based on an $SS_{REF}$ of the synchronization raster.

For example, A and B are used below to represent a CORESET 0 and a synchronization signal block/synchronization raster. When A represents a CORESET 0, B represents a synchronization signal block or a synchronization raster. When A represents a synchronization signal block or a synchronization raster, B represents a CORESET 0. First frequency domain offset information between A and B may be represented by an offset between a start frequency domain position of A and a start frequency domain position of B, may be represented by an offset between a center frequency position of A and a center frequency position of B, or may be represented by an offset between an end frequency domain position of A and an end frequency domain position of B. In other words, the first frequency domain offset information between A and B may be represented by a combination of any two elements that are respectively selected from two sets: {lowest frequency domain position of A, highest frequency domain position of A, center frequency position of A, and the like} and {lowest frequency domain position of B, highest frequency domain position of B, center frequency position of B, and the like}. It may be understood that the first frequency domain offset information may be a number greater than 0 and/or equal to 0 and/or less than 0. Relative positions of A and B may be distinguished by using a positive value and a negative value. For example, if the first frequency domain offset information is a negative value, a start frequency position of A is lower than a start frequency position of B.

For example, the first frequency domain offset information is frequency domain offset information between a start position of a CORESET 0 in frequency domain and a start position of a synchronization signal block in frequency domain; or the first frequency domain offset information is frequency domain offset information between a start position of a CORESET 0 in frequency domain and a synchronization raster. In some implementations, frequency domain positions of some synchronization signal blocks are preset by the system. For example, the frequency domain positions of the some synchronization signal blocks are defined by using synchronization rasters. The synchronization rasters are in a one-to-one correspondence with frequency information corresponding to the synchronization signal blocks. For example, for GSCNs defined in Table 5.4.3.1-1 in NR 38.101-1, one GSCN value corresponds to a reference frequency of one synchronization signal block. The reference frequency is a center frequency corresponding to the synchronization signal block. The frequency may be specific frequency information in a unit of Hz, MHz, kHz, or the like, for example, 5000 MHz. Further, for synchronization signal blocks or synchronization rasters (or GSCN) at different frequency domain positions, first frequency domain offset information of the CORESET 0 relative to the synchronization signal blocks or the synchronization rasters (or GSCN) at different frequency domain positions may be the same or different. Different first frequency domain offset information may be defined for each of the synchronization signal blocks or the synchronization rasters (or GSCN). It may be understood that, because the frequency domain position of the synchronization signal block or the synchronization raster (or GSCN) is preset by the system, a frequency domain position of the CORESET 0 may be determined based on the frequency domain position information of the synchronization signal block or the synchronization raster (or GSCN) and corresponding first frequency domain offset information. For example, the first frequency domain offset information between the CORESET 0 and the synchronization signal block or synchronization raster may be preset in a form of a table. The first information may correspond to one index (index), and one index may correspond to a set of configurations. The configurations include a pattern (pattern) of a synchronization signal block, configuration information (which may be one or more combinations of the number of RBs and the number of symbols) of a CORESET 0, and one or more types of the frequency domain offset information. Table 3 and Table 4 show configuration parameter tables when the first information separately corresponds to different indexes in scenarios with different subcarrier spacings. Further, the first frequency domain offset information is preset by using Table 5. Table 5 shows first frequency domain offset information between the CORESET 0 and different synchronization signal blocks in scenarios with different subcarrier spacings for different synchronization raster positions GSCNs that are preset by the system. In an example, $O_{15kHz}$, indicates frequency domain offset information represented by using a PRB that is defined by a 15 kHz subcarrier spacing as a basic unit, and $O_{30kHz}$ indicates frequency domain offset information represented by using a PRB that is defined by a 30 kHz subcarrier spacing as a basic unit. It may be understood that parameters defined in Table 3, Table 4, and Table 5 are all used as examples for description. Formats in Table 3, Table 4, and Table 5 may alternatively be combined. This does not constitute a limitation.

Optionally, in some embodiments, on the basis of the first frequency domain offset information, second frequency domain offset information may be further included, where the second frequency domain offset information is indicated by using a system message and/or RRC signaling and/or DCI signaling. The frequency domain offset between the CORESET 0 and the synchronization signal block or the synchronization raster value may be determined by combining the first frequency domain offset information and the second frequency domain offset information. The second frequency domain offset information may be understood as an offset. For example, the frequency domain offset information = the first frequency domain offset information + the second frequency domain offset information, where the first frequency domain offset information is offset information in a unit of a PRB, and the second frequency domain offset information is offset information in a unit of a subcarrier. In this way, more flexible indication can be implemented.

**Table 3 Configuration parameters of a CORESET 0 when the subcarrier spacing is 15 kHz**

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 96 | 1 | $O_{15}$kHz |
| 1 | 1 | 96 | 2 | $O_{15}$kHz |

**Table 4 Configuration parameters of a CORESET 0 when the subcarrier spacing is 30 kHz**

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | $O_{30kHz}$ |
| 1 | 1 | 48 | 2 | $O_{30kHz}$ |

**Table 5 Configuration parameters of offsets of a CORESET 0 relative to GSCNs when the spacings are 15 kHz and 30 kHz**

| GSCN | $O_{15kHz}$ | $O_{30kHz}$ | GSCN | $O_{15kHz}$ | $O_{30kHz}$ | GSCN | $O_{15kHz}$ | $O_{30kHz}$ |
|---|---|---|---|---|---|---|---|---|
| 8996 | 14 | 2 | 9232 | 13 | 2 | 9385 | 15 | 3 |
| 9010 | 15 | 3 | 9246 | 14 | 2 | 9402 | 12 | 1 |
| 9024 | 15 | 3 | 9260 | 15 | 3 | 9416 | 13 | 2 |
| 9037 | 8 | 0 | 9274 | 15 | 3 | 9430 | 13 | 2 |
| 9051 | 9 | 0 | 9287 | 8 | 0 | 9444 | 14 | 2 |
| 9065 | 10 | 0 | 9301 | 9 | 0 | 9458 | 15 | 3 |
| 9079 | 11 | 1 | 9315 | 10 | 0 | 9471 | 8 | 0 |
| 9093 | 12 | 1 | 9329 | 11 | 1 | 9485 | 9 | 0 |
| 9107 | 13 | 2 | 9343 | 12 | 1 | 9499 | 10 | 0 |
| 9121 | 14 | 2 | 9357 | 13 | 2 | 9513 | 11 | 1 |
| 9218 | 12 | 1 | 9371 | 14 | 2 | | | |

For related features of this embodiment, reference may be made to the foregoing embodiment or the following embodiment. Therefore, repeated parts are not described again. In addition, a network device or a terminal (or a related module, chip, system, computer program, or storage medium) in the following apparatus embodiments or system embodiments may also be configured to perform the method provided in the embodiments of this application.

The foregoing describes in detail the method for indicating control information according to an embodiment of this application, and the following describes a communications apparatus according to an embodiment of this application.

This embodiment of this application describes in detail a schematic structure of the communications apparatus.

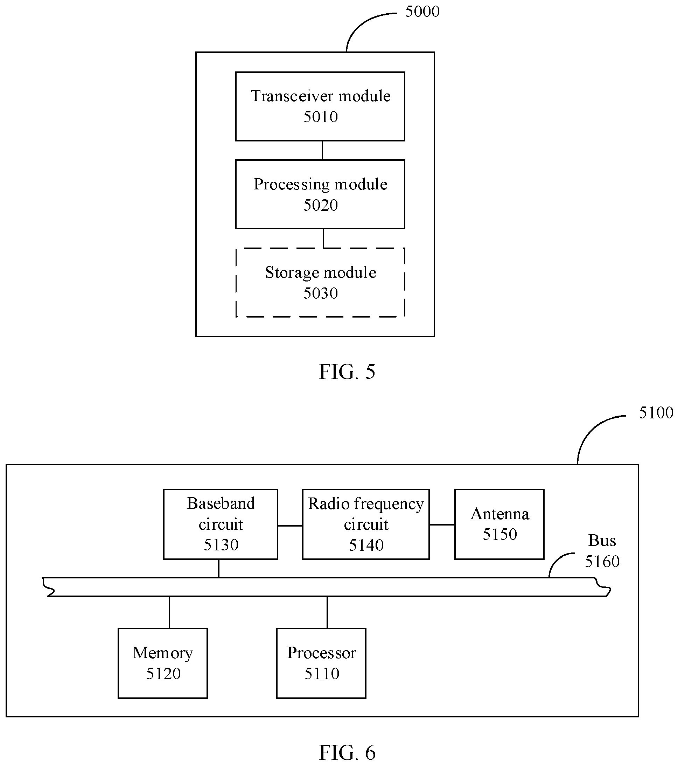

In an example, FIG. 5 shows a schematic block diagram of a communications apparatus 5000 according to an embodiment of this application. The apparatus 5000 in this embodiment of this application may be the terminal device in the foregoing method embodiments, or may be one or more chips in the terminal device. The apparatus 5000 may be configured to perform some or all functions of the terminal device in the foregoing method embodiments. The apparatus 5000 may include a transceiver module 5010 and a processing module 5020. Optionally, the apparatus 5000 may further include a storage module 5030.

For example, the transceiver module 5010 may be configured to receive the master information block from the network device in step 101 in the foregoing method embodiment, and receive the downlink control information from the network device in step 103.

The processing module 5020 may be configured to perform step 102 in the foregoing method embodiment.

Alternatively, the apparatus 5000 may be configured as a universal processing system, which, for example, is generally referred to as a chip. The processing module 5020 may include one or more processors that provide a processing function. The transceiver module 5010 may be, for example, an input/output interface, a pin, a circuit, or the like. The input/output interface may be responsible for information exchange between the chip and the outside. For example, the input/output interface may output uplink data of the terminal device to another module outside the chip for processing. The processing module may execute computer-executable instructions stored in the storage module, to implement a function of the terminal device in the foregoing method embodiment. In an example, the storage module 5030 that is optionally included in the apparatus 5000 may be a storage unit in a chip, for example, a register or a cache. The storage module 5030 may alternatively be a storage unit outside a chip in the terminal device, such as a read-only memory (read-only memory, ROM for short) or another type of static storage device that can store static information and instructions, or a random access memory (random access memory, RAM for short).

In another example, FIG. 6 shows a schematic block diagram of another communications apparatus 5100 according to an embodiment of this application. The apparatus 5100 in this embodiment of this application may be the terminal device in the foregoing method embodiments, and the apparatus 5100 may be configured to perform some or all functions of the terminal device in the foregoing method embodiments. The apparatus 5100 may include a processor 5110, a baseband circuit 5130, a radio frequency circuit 5140, and an antenna 5150. Optionally, the apparatus 5100 may further include a memory 5120. The processor 5110, the memory 5120, and the baseband circuit 5130 of the apparatus 5100 are coupled together through a bus 5160. In addition to a data bus, the bus system 5160 further includes a power bus, a control bus, and a status signal bus. However, for clear description, various types of buses in the figure are marked as the bus system 5160. The baseband circuit 5130 is connected to the radio frequency circuit 5140, and the radio frequency circuit 5140 is connected to the antenna 5150.

The processor 5110 may be configured to control the terminal device, and perform processing that is performed by the terminal device in the foregoing embodiments. The processor 5110 may perform processing processes related to the terminal device in the foregoing method embodiments and/or may be used for other processes of the technology described in this application, and may further run an operating system, manage the bus, and execute a program or instructions stored in the memory.

The baseband circuit 5130, the radio frequency circuit 5140, and the antenna 5150 may be configured to support information receiving and sending between the terminal device and the network device in the foregoing embodiments, so as to support wireless communication between the terminal device and the network device. In an example, after a master information block sent by the network device is received through the antenna 5150, the radio frequency circuit 5140 performs processing such as filtering, amplification, down-conversion, and digitization, and then the baseband circuit 5130 performs baseband processing such as decoding and data decapsulating according to a protocol, the processor 5110 performs processing to restore signaling information sent by the network device. In another example, after uplink data of the terminal device is processed by the processor 5110, baseband processing such as encapsulation according to a protocol and encoding is performed by the baseband circuit 5130, and radio frequency processing such as analog conversion, filtering, amplification, and up-conversion is further performed by the radio frequency circuit 5140, the uplink data is transmitted through the antenna 5150.

The memory 5120 may be configured to store program code and data of a station, and the memory 5120 may be the storage module 5030 in FIG. 5. It may be understood that the baseband circuit 5130, the radio frequency circuit 5140, and the antenna 5150 may be further configured to support communication between the terminal device and another network entity, for example, configured to support communication between the terminal device and a network element on a core network side. In FIG. 6, the memory 5120 is shown to be separated from the processor 5110. However, a person skilled in the art may readily appreciate that the memory 5120 or any portion thereof may be located outside the communications apparatus 5100. For example, the memory 5120 may include a transmission line and/or a computer product separated from a wireless node, all of which may be accessed by the processor 5110 through the bus 5160. Alternatively, the memory 5120 or any portion thereof may be integrated into the processor 5110, for example, may be a cache and/or a general-purpose register.

It may be understood that FIG. 6 shows only a simplified design of the terminal device. For example, in actual application, the terminal device may include any quantity of transmitters, receivers, processors, memories, and the like. All terminal devices that can implement this application fall within the protection scope of this application.

In a possible implementation, the communications apparatus may alternatively be implemented by using the following: one or more field-programmable gate arrays (field-programmable gate arrays, FPGAs), a programmable logic component (programmable logic device, PLD), a controller, a state machine, gate logic, a discrete hardware component, any other proper circuit, or any combination of circuits that can perform various functions described in this application. In another example, an embodiment of this application further provides a computer storage medium. The computer storage medium may store program instructions used to indicate any one of the foregoing methods, so that a processor executes the program instructions to implement the method and the function that are related to the terminal device in the foregoing method embodiments.

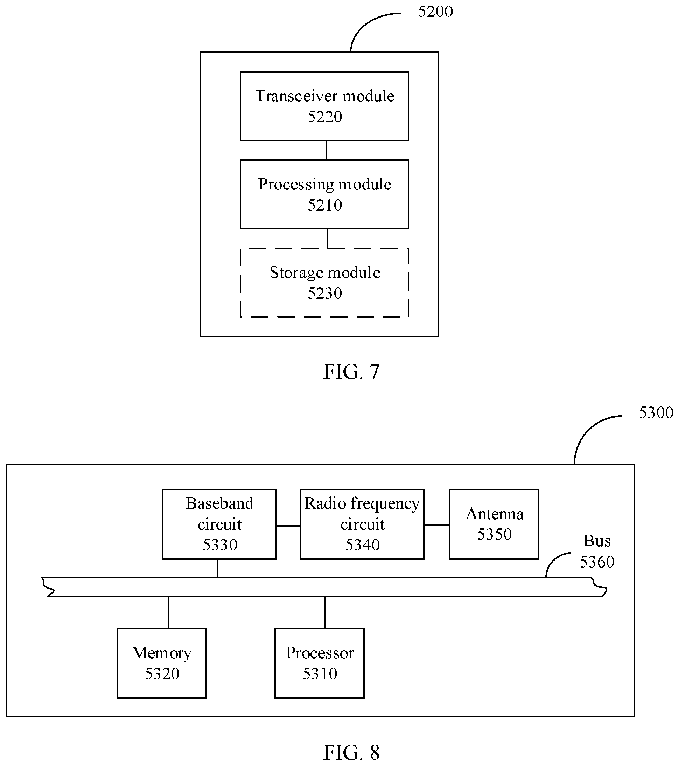

This embodiment of this application describes in detail a schematic structure of the communications apparatus. In an example, FIG. 7 shows a schematic block diagram of a communications apparatus 5200 according to an embodiment of this application. The apparatus 5200 in this embodiment of this application may be the network device in the foregoing method embodiments, or may be one or more chips in the network device. The apparatus 5200 may be configured to perform some or all functions of the network device in the foregoing method embodiments. The apparatus 5200 may include a processing module 5210 and a transceiver module 5220. Optionally, the apparatus 5200 may further include a storage module 5230.

For example, the transceiver module 5220 may be used by the network device to send the master information block in step 101 and send the downlink control information in step 103 in the foregoing method embodiment.

Alternatively, the apparatus 5200 may be configured as a universal processing system, which, for example, is generally referred to as a chip. The processing module 5210 may include one or more processors that provide a processing function. The transceiver module may be, for example, an input/output interface, a pin, or a circuit. The input/output interface may be responsible for information exchange between the chip and the outside. For example, the input/output interface may output a master information block to another module outside the chip for processing. The one or more processors may execute computer-executable instructions stored in the storage module, to implement functions of the network device in the foregoing method embodiments. In an example, the storage module 5230 that is optionally included in the apparatus 5200 may be a storage unit in a chip, for example, a register or a cache. The storage module 5230 may alternatively be a storage unit outside a chip in the network device, such as a read-only memory (read-only memory, ROM for short) or another type of static storage device that can store static information and instructions, or a random access memory (random access memory, RAM for short).

In another example, FIG. 8 shows a schematic block diagram of another communications apparatus 5300 according to an embodiment of this application. The apparatus 5300 in this embodiment of this application may be the network device in the foregoing method embodiments, and the apparatus 5300 may be configured to perform some or all functions of the network device in the foregoing method embodiments. The apparatus 5300 may include a processor 5310, a baseband circuit 5330, a radio frequency circuit 5340, and an antenna 5350. Optionally, the apparatus 5300 may further include a memory 5320. The processor 5310, the memory 5320, and the baseband circuit 5330 of the apparatus 5300 are coupled together through a bus 5360. In addition to a data bus, the bus system 5360 further includes a power bus, a control bus, and a status signal bus. However, for clear description, various types of buses in the figure are marked as the bus system 5360. The baseband circuit 5330 is connected to the radio frequency circuit 5340, and the radio frequency circuit 5340 is connected to the antenna 5350.

The processor 5310 may be configured to control the network device, and perform processing that is performed by the network device in the foregoing embodiments. The processor 5310 may perform processing processes related to the network device in the foregoing method embodiments and/or may be used for other processes of the technology described in this application, and may further run an operating system, manage the bus, and execute a program or instructions stored in the memory.

The baseband circuit 5330, the radio frequency circuit 5340, and the antenna 5350 may be configured to support information receiving and sending between the network device and the terminal device in the foregoing embodiments, so as to support wireless communication between the network device and the terminal device. In an example, after a master information block of the network device is processed by the processor 5310, baseband processing such as encapsulation according to a protocol and encoding is performed by the baseband circuit 5330, and radio frequency processing such as analog conversion, filtering, amplification, and up-conversion is further performed by the radio frequency circuit 5340, the master information block is transmitted through the antenna 5350. The memory 5320 may be configured to store program code and data of the network device, and the memory 5320 may be the storage module 5230 in FIG. 7. It may be understood that the baseband circuit 5330, the radio frequency circuit 5340, and the antenna 5350 may be further configured to support communication between the network device and another network entity, for example, configured to support communication between the network device and another network device.

It may be understood that FIG. 8 only shows a simplified design of the network device. For example, in actual application, the network device may include any quantity of transmitters, receivers, processors, memories, and the like, and all network devices that can implement this application fall within the protection scope of this embodiment of this application.

In a possible implementation, the communications apparatus may alternatively be implemented by using the following: one or more field-programmable gate arrays (field-programmable gate arrays, FPGAs), a programmable logic component (programmable logic device, PLD), a controller, a state machine, gate logic, a discrete hardware component, any other proper circuit, or any combination of circuits that can perform various functions described in this application.

In another example, an embodiment of this application further provides a computer storage medium. The computer storage medium may store program instructions used to indicate any one of the foregoing methods, so that a processor executes the program instructions to implement the method and the function that are related to the network device in the foregoing method embodiments.

The processor in each of the apparatus 5100 and the apparatus 5300 may be a general-purpose processor, for example, a general-purpose central processing unit (CPU), a network processor (Network Processor, NP for short), or a microprocessor, or may be an application-specific integrated circuit (application-specific integrated circuit, ASIC for short), or one or more integrated circuits configured to control program execution in the solutions of this application. The processor may alternatively be a digital signal processor (Digital Signal Processor, DSP for short), a field-programmable gate array (Field-Programmable Gate Array, FPGA for short) or another programmable logic device, a discrete gate or a transistor logic device, or a discrete hardware component. Alternatively, the controller/processor may be a combination of processors implementing a computing function, for example, a combination of one or more microprocessors, or a combination of a DSP and a microprocessor. The processor usually performs logical and arithmetic operations according to program instructions stored in the memory.

The memories related to the apparatus 5100 and the apparatus 5300 may further store an operating system and another application program. Specifically, the program may include program code, and the program code includes computer operation instructions. More specifically, the memory may be a read-only memory (read-only memory, ROM for short), another type of static storage device that can store static information and instructions, a random access memory (random access memory, RAM for short), another type of dynamic storage device that can store information and instructions, or a magnetic disk storage, or the like. The memory may be a combination of the foregoing storage types. In addition, the computer-readable storage medium/memory may be located in the processor, or may be located outside the processor, or distributed in a plurality of entities including the processor or a processing circuit. The computer-readable storage medium/memory may be specifically embodied in a computer program product. For example, the computer program product may include a computer-readable medium in a packaging material.

In the several embodiments provided in this application, it should be understood that the disclosed system, apparatus, and method may be implemented in other manners. For example, the described apparatus embodiments are only examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate components may or may not be physically separate, and components displayed as units may or may not be physical units. To be specific, the components may be located at one position, or may be distributed on a plurality of network units. A part or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software functional unit.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

## Claims

1. A method for indicating control information, comprising:

   receiving first information sent by a network device, wherein the first information is used to indicate the number of symbols occupied by a control resource set CORESET 0 in time domain and a first offset of the CORESET 0 in frequency domain;
   determining a time-frequency resource position of the CORESET 0 based on the first information and a preset subcarrier spacing; and
   receiving downlink control information at the time-frequency resource position of the CORESET 0.

2. The method according to claim 1, wherein when one slot supports sending of one or more synchronization signal blocks SSBs and CORESET 0s, the first information is further used to indicate the number of CORESET 0s in each slot.

3. The method according to claim 1 or 2, wherein the first offset is used to indicate a sequence number of a first resource block RB corresponding to the CORESET 0, the first RB is located in a bandwidth part in which an SSB corresponding to the first information is located, the first offset is any one of X1, X2, X3, and X4, and X1, X2, X3, and X4 are integers and are not equal.

4. The method according to claim 3, wherein when the preset subcarrier spacing is 15 kHz or 30 kHz, the first information comprises four bits.

5. The method according to claim 1 or 2, wherein the first offset is used to indicate a sequence number of a first resource block RB corresponding to the CORESET 0, the first RB is located in a bandwidth part in which an SSB corresponding to the first information is located, the first offset is any one of Y1, Y2, Y3, Y4, Y5, and Y6, and Y1, Y2, Y3, Y4, Y5, and Y6 are integers and are not equal.

6. The method according to claim 5, wherein when the preset subcarrier spacing is 15 kHz, the first information comprises five bits.

7. The method according to any one of claims 1 to 6, wherein the method further comprises:
receiving second information sent by the network device, wherein the second information is used to indicate a second offset of the CORESET 0 in frequency domain, the second offset is used to indicate a sequence number of a subcarrier in a first RB corresponding to the CORESET 0, the second offset is any one of 0 to 11, and the time-frequency resource position of the CORESET 0 is determined based on the first information and the second information.

8. The method according to any one of claims 1 to 6, wherein the bandwidth part in which the SSB corresponding to the first information is located is aligned with a frequency range of a wireless local area network, and the SSB is sent at a preset position of the bandwidth part.

9. The method according to claim 8, wherein the method further comprises:
receiving second information sent by the network device, wherein the second information is used to indicate at least one reference signal, and the at least one reference signal and the synchronization signal block are in a quasi co-location relationship.

10. A method for indicating control information, comprising:

sending first information to a terminal device, wherein the first information is used to indicate the number of symbols occupied by a control resource set CORESET 0 in time domain and a first offset of the CORESET 0 in frequency domain, and the first information is determined based on a preset subcarrier spacing; and
sending downlink control information at a time-frequency resource position of the CORESET 0.

11. The method according to claim 10, wherein the method further comprises:
sending second information to the terminal device, wherein the second information is used to indicate a second offset of the CORESET 0 in frequency domain, the second offset is used to indicate a sequence number of a subcarrier spacing in a first RB corresponding to the CORESET 0, and the second offset is any one of 0 to 11.

12. The method according to claim 10, wherein a bandwidth part in which a synchronization signal block corresponding to the first information is located is aligned with frequency range division of a wireless local area network, and the synchronization signal block is sent at a preset position of the bandwidth part.

13. The method according to claim 12, wherein the method further comprises:
sending second information to the terminal device, wherein the second information is used to indicate at least one reference signal, and the at least one reference signal and the synchronization signal block are in a quasi co-location relationship.

14. A wireless communications apparatus, comprising:

a transceiver, configured to receive first information sent by a network device, wherein the first information is used to indicate the number of symbols occupied by a control resource set CORESET 0 in time domain and a first offset of the CORESET 0 in frequency domain; and

a processor, configured to determine a time-frequency resource position of the CORESET 0 based on the first information and a preset subcarrier spacing, wherein

the processor is further configured to receive downlink control information at the time-frequency resource position of the CORESET 0 through the transceiver.

15. The apparatus according to claim 14, wherein when one slot supports sending of one or more synchronization signal blocks SSBs and CORESET 0s, the first information is further used to indicate the number of CORESET 0s in each slot.

16. The apparatus according to claim 14 or 15, wherein the first offset is used to indicate a sequence number of a first resource block RB corresponding to the CORESET 0, the first RB is located in a bandwidth part in which a synchronization signal block corresponding to the first information is located, the first offset is any one of X1, X2, X3, and X4, and X1, X2, X3, and X4 are integers and are not equal.

17. The apparatus according to claim 16, wherein when the preset subcarrier spacing is 15 kHz or 30 kHz, the first information comprises four bits.

18. The apparatus according to claim 14 or 15, wherein the first offset is used to indicate a sequence number of a first resource block RB corresponding to the CORESET 0, the first RB is located in a bandwidth part in which a synchronization signal block corresponding to the first information is located, the first offset is any one of Y1, Y2, Y3, Y4, Y5, and Y6, and Y1,Y2, Y3, Y4, Y5, and Y6 are integers and are not equal.

19. The apparatus according to claim 18, wherein when the preset subcarrier spacing is 15 kHz, the first information comprises five bits.

20. The apparatus according to any one of claims 14 to 19, wherein the transceiver is further configured to receive second information sent by the network device, wherein the second information is used to indicate a second offset of the CORESET 0 in frequency domain, the second offset is used to indicate a sequence number of a subcarrier in a first RB corresponding to the CORESET 0, the second offset is any one of 0 to 11, and the time-frequency resource position of the CORESET 0 is determined based on the first information and the second information.

21. The apparatus according to any one of claims 14 to 19, wherein the bandwidth part in which the synchronization signal block corresponding to the first information is located is aligned with a frequency range of a wireless local area network, and the synchronization signal block is sent at a preset position of the bandwidth part.

22. The apparatus according to claim 21, wherein the transceiver is further configured to receive second information sent by the network device, the second information is used to indicate at least one reference signal, and the at least one reference signal and the synchronization signal block are in a quasi co-location relationship.

23. A wireless communications apparatus, comprising:

a transceiver, configured to send first information to a terminal device, wherein the first information is used to indicate the number of symbols occupied by a control resource set CORESET 0 in time domain and a first offset of the CORESET 0 in frequency domain, and the first information is determined based on a preset subcarrier spacing; and

a processor, configured to send downlink control information at a time-frequency resource position of the CORESET 0 through the transceiver.

24. The apparatus according to claim 23, wherein the transceiver is further configured to send second information to the terminal device, wherein the second information is used to indicate a second offset of the CORESET 0 in frequency domain, the second offset is used to indicate a sequence number of a subcarrier spacing in a first RB corresponding to the CORESET 0, and the second offset is any one of 0 to 11.

25. The apparatus according to claim 23, wherein a bandwidth part in which a synchronization signal block corresponding to the first information is located is aligned with frequency range division of a wireless local area network, and the synchronization signal block is sent at a preset position of the bandwidth part.

26. The apparatus according to claim 25, wherein the transceiver is further configured to send second information to the terminal device, the second information is used to indicate at least one reference signal, and the at least one reference signal and the synchronization signal block are in a quasi co-location relationship.

27. A terminal device, comprising:

one or more processors; and
a memory, configured to store one or more programs, wherein
when the one or more programs are executed by the one or more processors, the one or more processors are enabled to implement the method according to any one of claims 1 to 9.

28. A network device, comprising:

one or more processors; and
a memory, configured to store one or more programs, wherein
when the one or more programs are executed by the one or more processors, the one or more processors are enabled to implement the method according to any one of claims 10 to 13.

29. A computer-readable storage medium, comprising a computer program, wherein when the computer program is executed on a computer, the computer is enabled to perform the method according to any one of claims 1 to 13.

30. A computer program, wherein the computer program is executed by a computer to perform the method according to any one of claims 1 to 9 or the method according to any one of claims 10 to 13.

31. A chip, comprising a processor and a memory, wherein the memory is configured to store a computer program, and the processor is configured to invoke and run the computer program stored in the memory, to perform the method according to any one of claims 1 to 9 or the method according to any one of claims 10 to 13.

24

Slot 1     Slot 2     Slot 3     Slot 4

| | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

SSB

SSB content

SSB    PSS    SSS    PBCH

FIG. 1

FIG. 2

Terminal device

Network device

Step 101: First information

Step 102: Determine a time-frequency resource position of a CORESET 0 based on the first information and a predetermined subcarrier spacing

Step 3: Send downlink control information at the time-frequency resource position of the CORESET 0

FIG. 3

FIG. 4A

EP 4 017 166 A1

Synchronization signal burst set window

1 slot

| 0 | 1 | 2 | 3 | 4 | 5 | 6 | 7 | 8 | 9 | 10 | 11 | 12 | 13 |

PSS

PBCH

PBCH

SSS

PBCH

PBCH

PSS

PBCH

PBCH

SSS

PBCH

PBCH

SSB

SSB

Corresponding RMSI PDSCH/CSI-RS

Corresponding RMSI PDSCH

Corresponding CORESET 0

Corresponding CORESET 0

FIG. 4B

Synchronization signal burst set window

1 slot

...

| 0 | 1 | 2 | 3 | 4 | 5 | 6 | 7 | 8 | 9 | 10 | 11 | 12 | 13 |

PBCH

P
S
S

P
B
C
H

S
S
S

P
B
C
H

PBCH

PBCH

P
S
S

P
B
C
H

S
S
S

P
B
C
H

PBCH

SSB

SSB

Corresponding RMSI
PDSCH/CSI-RS

Corresponding RMSI
PDSCH

Corresponding
CORESET 0

Corresponding
CORESET 0

FIG. 4C

Synchronization signal burst set window

FIG. 4D

5000

Transceiver module
5010

Processing module
5020

Storage module
5030

FIG. 5

5100

Baseband
circuit
5130

Radio frequency
circuit
5140

Antenna
5150

Bus
5160

Memory
5120

Processor
5110

FIG. 6

5200

Transceiver module
5220

Processing module
5210

Storage module
5230

FIG. 7

5300

Baseband
circuit
5330

Radio frequency
circuit
5340

Antenna
5350

Bus
5360

Memory
5320

Processor
5310

FIG. 8

Slot 1 — Slot 2 — Slot 3 — Slot 4 — Slot 5 — Slot 6 — Slot 7 — Slot 8

0/0 1/0 2/0 3/0 4/0 5/0 6/0 7/0 0/1 1/1 2/1 3/1 4/1 5/1 6/1 7/1 0/2 1/2 2/2 3/2

CORESET0    SSB
            RMSI
            PDSCH

Symbol 0 1 2 3 4 5 6 7 8 9 10 11 12 13

CORESET0    SSB
            RMSI
            PDSCH

Symbol 0 1 2 3 4 5 6 7 8 9 10 11 12 13

SSB candidate position (SSB transmitted)
SSB candidate TX position

SSB candidate position (SSB not transmitted)
Candidate position not transmitted

FIG. 9

## INTERNATIONAL SEARCH REPORT

International application No.

**PCT/CN2019/116834**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, CNPAT, CNKI, 控制信息, 时域, 频域, 偏移, 间隔, control+ w Information, time w domain, frequency w domain, offset, interval

### C. DOCUMENTS CONSIDERED TO BE RELEVANT

| Category* | Citation of document, with indication, where appropriate, of the relevant passages | Relevant to claim No. |
|---|---|---|
| X | CN 109803402 A (ZTE CORPORATION) 24 May 2019 (2019-05-24) description, paragraphs 0006-0098 | 1-31 |
| A | CN 109802814 A (SPREADTRUM COMMUNICATIONS (SHANGHAI) INC.) 24 May 2019 (2019-05-24) entire document | 1-31 |
| A | CN 109218000 A (HUAWEI TECHNOLOGIES CO., LTD.) 15 January 2019 (2019-01-15) entire document | 1-31 |
| A | CN 109952803 A (MEDIATEK INC.) 28 June 2019 (2019-06-28) | 1-31 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 May 2020** | **18 May 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/116834**

| Patent document cited in search report | | | Publication date (day/month/year) | Patent family member(s) | | | Publication date (day/month/year) |
|---|---|---|---|---|---|---|---|
| CN | 109803402 | A | 24 May 2019 | WO | 2019096291 | A1 | 23 May 2019 |
| CN | 109802814 | A | 24 May 2019 | None | | | |
| CN | 109218000 | A | 15 January 2019 | AU | 2018294476 | A1 | 23 January 2020 |
| | | | | CN | 109462892 | A | 12 March 2019 |
| | | | | CN | 109462892 | B | 19 November 2019 |
| | | | | KR | 20200016977 | A | 17 February 2020 |
| | | | | IN | 201947054722 | A | 03 January 2020 |
| | | | | WO | 2019001523 | A1 | 03 January 2019 |
| CN | 109952803 | A | 28 June 2019 | US | 2018368116 | A1 | 20 December 2018 |
| | | | | WO | 2018228555 | A1 | 20 December 2018 |

Form PCT/ISA/210 (patent family annex) (January 2015)